# EUROPEAN PATENT SPECIFICATION

(11) **EP 2 997 761 B1**
(45) Date of publication and mention of the grant of the patent: **02.01.2019**
(21) Application number: 13723741.8
(22) Date of filing: 14.05.2013
(51) Int. Cl.: H04W 4/14, H04W 28/18, H04W 4/06, H04W 8/18

(54) **A NODE AND A METHOD FOR SMALL DATA COMMUNICATIONS**
VORRICHTUNG VERFAHREN ZUR KLEINE DATENKOMMUNIKATIONEN
NOEUD ET PROCÉDÉ POUR COMMUNICATIONS DE FAIBLES QUANTITÉS DE DONNÉES

(43) Date of publication of application: 23.03.2016
(73) Proprietor: Telefonaktiebolaget LM Ericsson (publ), 164 83 Stockholm (SE)
(72) Inventor: RÖNNEKE, Hans, 43234 Kungsbacka (SE); RYDNELL, Gunnar, 41132 Göteborg (SE)
(74) Representative: Ericsson
(86) International application number: PCT/EP2013/059902
(87) International publication number: WO 2014/183780

(56) References cited:
- ERICSSON ET AL: "Small data fast path Establishment", 3GPP DRAFT; S2-130808_SDFP_ESTABLISHMENT_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Diego, CA; 20130408 - 20130412 2 April 2013 (2013-04-02), XP050708071, Retrieved from the Internet: URL:http://www.3gpp.org/ftp/tsg_sa/WG2_Arc h/TSGS2_96_San_Diego/Docs/ [retrieved on 2013-04-02]
- ERICSSON ET AL: "Small data fast path updates", 3GPP DRAFT; S2-130717_WAS0701_WAS0693_MTCE-SDDTE-SMALL _DATA_FAST_PATH_V12, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. SA WG2, no. Prague, Czech Republic; 20130128 - 20130201 4 February 2013 (2013-02-04), XP050685241, Retrieved from the Internet: URL:http://www.3gpp.org/ftp/tsg_sa/WG2_Arc h/TSGS2_95_Prague/Docs/ [retrieved on 2013-02-04]
- ZTE ET AL: "Clarification on aspects of Small Data Fast Path Solution", 3GPP DRAFT; S2-131026, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Diego, California, USA; 20130408 - 20130412 2 April 2013 (2013-04-02), XP050708256, Retrieved from the Internet: URL:http://www.3gpp.org/ftp/tsg_sa/WG2_Arc h/TSGS2_96_San_Diego/Docs/ [retrieved on 2013-04-02]

## Description

### TECHNICAL FIELD

Example embodiments presented herein are directed towards a mobility management node, and corresponding methods therein, for regulating small data communications within a network. Example embodiments presented herein are also directed towards a device, and corresponding methods therein, for small data communications.

### BACKGROUND

In a typical cellular system, also referred to as a wireless communications network, wireless terminals, also known as mobile stations and/or user equipment units communicate via a Radio Access Network (RAN) to one or more core networks. The wireless terminals can be mobile stations or user equipment units such as mobile telephones also known as "cellular" telephones, and laptops with wireless capability, e.g., mobile termination, and thus can be, for example, portable, pocket, hand-held, computer-comprised, or car-mounted mobile devices which communicate voice and/or data with radio access network.

The radio access network covers a geographical area which is divided into cell areas, with each cell area being served by a base station, e.g., a Radio Base Station (RBS), which in some networks is also called "NodeB" or "B node" or "Evolved NodeB" or "eNodeB" or "eNB" and which in this document also is referred to as a base station. A cell is a geographical area where radio coverage is provided by the radio base station equipment at a base station site. Each cell is identified by an identity within the local radio area, which is broadcast in the cell. The base stations communicate over the air interface operating on radio frequencies with the user equipment units within range of the base stations.

In some versions of the radio access network, several base stations are typically connected, e.g., by landlines or microwave, to a Radio Network Controller (RNC). The radio network controller, also sometimes termed a Base Station Controller (BSC), supervises and coordinates various activities of the plural base stations connected thereto. The radio network controllers are typically connected to one or more core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) access technology. UMTS Terrestrial Radio Access Network (UTRAN) is essentially a radio access network using wideband code division multiple access for user equipment units (UEs). The Third Generation Partnership Project (3GPP) has undertaken to evolve further the UTRAN and GSM based radio access network technologies. Long Term Evolution (LTE) together with Evolved Packet Core (EPC) is the newest addition to the 3GPP family.

One category of user equipments is Machine-to-Machine (M2M) devices, which in some contexts are also called Machine-Type Communication (MTC) devices. M2M devices typically engage in infrequent and small data communications. Thus, various communication methods are specified for M2M communications in order to save system resources Document D1, Ericsson et Al, "Smalldata fast path establishment", 3GPP DRAFT, S2-130808_SDFP_ESTABLISHMENT_V2, 3GPP,discloses a method for establishing small data fast path. If data arrives to the UE or the SGW and meets the small data criteria this data is sent in the fast path, otherwise the data is sent normal way by initiating a service request.

### SUMMARY

The 3GPP network (e.g. LTE/EPC) is now, and has been since the beginning, used predominantly for mobile phones. Therefore, the LTE/EPC is optimized for conveying rather large chunks of data. When using LTE/EPC based networks for M2M devices, especially in constrained environments, the LTE/EPC networks as of today might be considered too expensive a technology and might not match the requirements of the constrained environment. Examples of such constrained environments may be embedded devices with limited processor, memory, bandwidth or power resources, and cost sensitive use cases. Thus, example embodiments presented herein provide for managing communications which do not require great demands on system resources. This type of communications may be referred to as small data communications.

At least one example advantage of managing such small data communications, according to the example embodiments presented herein, may be the prevention of unnecessary consumption of infrastructure resources that would require costly investments and eventually prevent the adoption of the 3GPP access for cost sensitive M2M applications. At least one further example advantage is that M2M messaging category devices may use a special low priced subscription. The example embodiments allows for control of such subscriptions to only allow a limited or constrained set of services. This would prevent the M2M messaging category device or subscription to be misused for other types of usage, for example, mobile internet from PCs, mobile phones, or SurfPads, etc.

Some of the example embodiments presented herein also allow equipment vendors to provide special products adapted for the traffic model of such limited or constrained category devices or subscriptions and at cost level competitive in the M2M messaging market segment. A further example advantage is providing the ability to supervise congestion and overload for messaging category devices and take specific action for limited or constrained category devices/subscriptions when congestion or overload occurs.

Yet another example advantage is the ability of disabling or limiting services using a Message Control Function (MCF), or new functionality provided in the mobility management node, based on a messaging category, or a predetermined type of small data communications, instead of disabling each service individually in the HSS. The ability to disable or limit services using a MCF provides a much higher flexibility and granularity on how the service limitation is done. It also enables vendor/implementation specific service limitation to be used. Furthermore, by using device parameters as input instead of HSS subscription parameters, service limitation can also be controlled for inbound roamers independent of the home operator, hence protecting the operator network from resources consumed by massive numbers of roaming devices entering the network.

Accordingly, some of the example embodiments are directed towards a method, in a mobility management node, for regulating small data communications in a network. The method comprises identifying a device is configured to use a predetermined type of small data communications. The method further comprises restricting at least one communication functionality of the device according to a restriction profile associated with the predetermined type of small data communications.

Some of the example embodiments are directed towards a mobility management node for regulating small data communications in a network. The mobility management node comprises processing circuitry configured to identify a device is configured to use a predetermined type of small data communications. The processing circuitry is further configured to restrict at least one communication functionality of the device according to a restriction profile associated with the predetermined type of small data communications.

Some of the example embodiments are directed towards a method in a device configured for small data communications in a network. The device is in communication with a LTE based network. The method comprises sending, to a mobility management node, an attach request. The method further comprises receiving, from the mobility management node, an attach response. The attach response comprises restriction instructions and/or result code(s) for a restriction of at least one communication functionality associated with the device based on a predetermined type of small communications the device is configured to engage in.

Some of the example embodiments are directed towards a device configured for small data communications in a network. The device is in communication with a LTE based network. The device comprises radio circuitry configured to send, to a mobility management node, an attach request. The radio circuitry is also configured to receive, from the mobility management node, an attach response. The attach response comprises restriction instructions and/or result code(s) for a restriction of at least one communication functionality associated with the device based on a predetermined type of small communications the device is configured to engage in.

### DEFINITIONS

- 3GPP: Third Generation Partnership Project
- AMBR: Aggregated Maximum Bitrate
- APN: Access Point Name
- ARPU: Average Revenue per User
- AS: Application Server
- AS: Access Stratum
- BSC: Base Station Controller
- CDR: Charging Data Records
- CSFB: Circuit Switched FallBack
- CoAP: Constrained Application Protocol
- DL: Downlink
- E-UTRAN: Evolved Universal Terrestrial Radio Access Network
- ECM: Evolved Packet System Connection Management
- EPC: Evolved Packet Core
- EPS: Evolved Packet System
- ESM: Evolved Packet System Session Management
- GERAN: GSM/EDGE Radio Access Network
- GPRS: General Packet Radio Service
- GSM: Global System for Mobile Communications
- HLR: Home Location Register
- HSS: Home Subscriber Server
- IMEI: International Mobile Equipment Identity
- IMS: Internet Protocol Multimedia Subsystem
- IMSI: International Mobile Subscriber Identity
- IP: Internet Protocol
- IWF: InterWorking Function
- LDAP: Lightweight Directory Access Protocol
- LTE: Long Term Evolution
- M2M: Machine-to-Machine
- MBR: Maximum Bitrate
- MCF: Message Control Function
- MME: Mobility Management Entity
- MO: Mobile Originated
- MQTT: Message Queue Telemetry Transport
- MSC: Mobile Switching Centre
- MT: Mobile Terminated
- MTC: Machine Type Communication
- NAS: Non-Access Stratum
- PCRF: Policy Control and Charging Rules Function
- PDN: Packet Data Network
- PDP: Packet Data Protocol
- PGW: PDN Gateway
- QCI: QoS Class Identifier
- QoS: Quality of Service
- RAB: Radio Access Bearer
- RAN: Radio Access Network
- RAT: Radio Access Type
- RBS: Radio Base Station
- RF: Radio Frequency
- RNC: Radio Network Controller
- RRC: Radio Resource Control
- SC: Service Center
- SCS: Service Capability Server
- SGSN: Serving GPRS Support Node
- SGW: Serving Gateway
- SMS: Short Message Service
- TA: Tracking Area
- TAC: Type Approval Code
- TAU: Tracking Area Update
- UE: user equipment
- UL: Uplink
- UMTS: Universal Mobile Telecommunications System
- UTRAN: UMTS Terrestrial Radio Access Network
- WCDMA: Wideband Code Division Multiple Access
- WLAN: Wireless Local Area Network

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is a schematic of a wireless communications network;
FIG. 2 is an illustrative example of events or signalling that trigger restriction or disablement, according to some of the example embodiments;
FIG. 3 is a messaging diagram of an attach procedure, according to some of the example embodiments;
FIG. 4 is an example node configuration of a mobility management node, according to some of the example embodiments;
FIG. 5 is an example node configuration of a device, according to some of the example embodiments;
FIG. 6 is a flow diagram depicting example operations of the mobility management node of FIG. 4, according to some of the example embodiments; and
FIG. 7 is a flow diagram depicting example operations of the device of Figure 5, according to some of the example embodiments.

### DETAILED DESCRIPTION

In the following description, for purposes of explanation and not limitation, specific details are set forth, such as particular components, elements, techniques, etc. in order to provide a thorough understanding of the example embodiments. However, it will be apparent to one skilled in the art that the example embodiments may be practiced in other manners that depart from these specific details. In other instances, detailed descriptions of well-known methods and elements are omitted so as not to obscure the description of the example embodiments. The terminology used herein is for the purpose of describing the example embodiments and is not intended to limit the embodiments presented herein.

It should be appreciated that all of the example embodiments presented herein may be applicable to a GERAN, UTRAN or E-UTRAN based system. In all explanations and examples provided, a mobility management node may be a MME, SGSN, or a S4-SGSN (even if only a MME is provided in the example).

### General overview

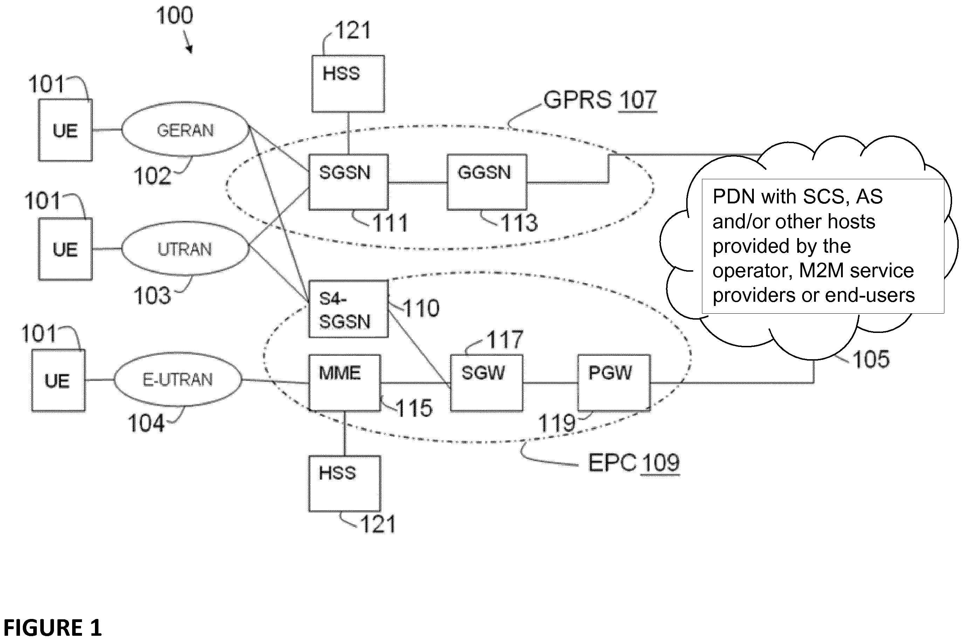

In order to provide a better explanation of the example embodiments presented herein, a problem will first be identified and discussed. **Figure 1** provides a general example of a communication network 100. As shown in Figure 1, a user equipment (UE) 101 may be in communication with a Universal Terrestrial Radio Access Network (UTRAN) 103, an Evolved UTRAN (E-UTRAN) 104, or a GSM Edge Radio Access Network (GERAN) 102 subsystem in order to access communication to an operator or application server 105. In gaining access to SCS or AS or hosts 105, the UTRAN/E-UTRAN/GERAN subsystem 102-104 may be in communication with a General Packet Radio Service (GPRS) subsystem 107 or an Evolved Packet Core (EPC) subsystem 109. It should also be appreciated that the network may further comprise a WiFi subsystem, although not illustrated in Figure 1.

The GPRS subsystem 107 may comprise a Serving GPRS Support Node (SGSN) 111, which may be responsible for the delivery of data packets to and from the mobile stations within an associated geographical service area. The SGSN 111 may also be responsible for packet routing, transfer, mobility management and connectivity management. The GPRS subsystem 107 may also include a Gateway GPRS Support Node 113, which may be responsible for the interworking between the GPRS subsystem 107 and the PDN 105.

The EPC subsystem 109 may comprise a Mobility Management Entity 115, which may be responsible for mobility management, connectivity management, idle mode UE tracking, paging procedures, attachment and activation procedures, and small data and message transfer. The EPC subsystem may also comprise a Serving Gateway (SGW) 117, which may be responsible for the routing and forwarding of data packets. The EPC subsystem may also include a Packet data network Gateway (PGW) 119, which may be responsible for providing connectivity from the user equipment 101 to one or more PDN(s) 105. Both the SGSN 111 and the MME 115 may be in communication with a Home Subscriber Server (HSS) 121, which may provide device identification information, an International Mobile Subscriber Identity (IMSI), subscription information, etc. It should be appreciated that the EPC subsystem 109 may also comprise a S4-SGSN 110, thereby allowing the GERAN 102 or UTRAN 103 subsystems to be accessed when the GPRS 107 is replaced by the EPC 109.

One specific example of a user equipment is a Machine-to-Machine (M2M) device. Generally, M2M devices require less system resources as compared to regular wireless devices (e.g., smart phones). M2M devices typically engage in infrequent communications and in the transfer of small data. It is expected that some M2M devices, for example, operating in constrained environments, will only use messaging (or small data) for their communication. Thus, such M2M devices may not engage in voice or video based communications. As the LTE/EPC networks and equipment are made for and priced for mobile phones, smart phones and mobile internet modems, it may be difficult for both LTE/EPC operators and equipment vendors to meet the low cost requirements of these M2M scenarios.

Optimizations for M2M messaging is proposed in 3GPP SA2 documented TR 23.887 V0.9.0. Some examples of such proposed solutions are in chapter 5.1.1.3.3 "Solution: Standalone Small Data Service with T5/Tsp and generic NAS transport", chapter 5.1.1.3.1 "Solution: Small Data Transfer starting from RRC IDLE (E-UTRAN): Use of pre-established NAS security context to transfer the IP packet as NAS signaling without establishing RRC security", chapter 5.1.1.3.6 "Solution: Small data fast path / Connection less" or other solutions in, for example, chapter 5.1.1.3.

### Overview of the example embodiments

The existing 3GPP solutions, for example in TR 23.887 V0.9.0, optimize transmission of small data which may be used for M2M messaging, for example, by sensor based devices or other type of constrained devices that only communicate with the network using message passing. The problem with the existing solutions is that resources are allocated in the network even if the intention is to only use the M2M device or subscription for messaging or small data communications. This prevents the operators from keeping a lower price level for such subscriptions/devices, which is necessary for the M2M industry to adopt the 3GPP access for M2M applications. A spokesman for an operator said that if ARPU is $30 for a normal smartphone subscriber, the ARPU for a M2M constrained subscriptions may be expected to be only $3.

For the operator it is also a problem that such low priced subscriptions for M2M usage are misused for other purposes, for example, normal mobile internet usage, thereby cannibalizing on the operator's sales of subscriptions in other segments. For the equipment vendor there is a similar problem if low cost equipment sold specifically for M2M usage is instead used by the operator for normal subscriptions.

Examples of resources being unnecessarily allocated in the network may be found in chapter 5.1.1.3.3 "Solution: Standalone Small Data Service with T5/Tsp and generic NAS transport", as described above. This solution provides the allocation of a default bearer and a PDN connection that would not be required for pure messaging applications.

Another example of unnecessary allocation may be found in chapter 5.1.1.3.1 "Solution: Small Data Transfer starting from RRC IDLE (E-UTRAN): Use of pre-established NAS security context to transfer the IP packet as NAS signalling without establishing RRC security", and chapter 5.1.1.3.6 "Solution: Small data fast path / Connection less", as described above. These solutions provide that UL and DL data may trigger Service Requests which consume resources in the network by signalling and establishment of (additional) data radio bearers. Requests from the device or the PCRF in the network may also request the establishment of additional bearers or PDN connections which also consume resources.

In order to alleviate the above mentioned problems, some the of example embodiments presented herein provide for a M2M messaging control function (MCF), or new functionality for communications management, being added in the network, for example, in the MME (or the SGSN or S4-SGSN). According to some of the example embodiments, the messaging control function (MCF) learns that the device is a messaging category device (e.g., a device configured for small data communications) or that it is using a messaging category subscription (e.g., a predetermined type of small data communications) and the MCF thereafter disables functions in the 3GPP network that is normally present and active for other types of terminals and subscriptions, for example, for smart phones or modems for mobile internet. The messaging control function may also adapt functions, levels and parameters to a level that is sufficient or optimized for the category of the messaging device or subscription.

According to some of the example embodiments, the adaption of functions may comprise, for example, disabling bearers and PDN connections completely for the LTE device, limiting the device to only one (default) bearer and PDN connection, disabling normal service requests or disabling an ECM-CONNECTED mode in the Core Network nodes, for example, MME and/or SGW. According to some of the example embodiments, the setting of parameters or levels to certain limits may comprise, for example, traffic shaping, the setting of MBR and/or APN-AMBR to an appropriate low value, for example, 8 kbps or 64 kbps, or limiting QoS parameters, or limiting QoS Class Identifier (QCI) to specific value or set of values, or setting filters to only allow traffic with pre-configured IP addresses or hosts.

According to some of the example embodiments, the mobility management node may also be configured to supervise congestion and overload and, for example, block or disable devices completely that are running havoc and starting to send or receive excessive amount of messages above an agreed subscription level or a pre-configured system level.

The remainder of the text is organized as follows. First, non-limiting examples of how a device may be identified as being configured to engage in small data communications are provided under the subheading "Identification of a small communications device". Thereafter, non-limiting examples of communication functionality management is provided under the subheading "Function and/or service limitation or disablement". Finally, example node configurations and example node operations for carrying out the various example embodiments presented herein is provided under the subheadings "Example node configuration" and "Example node operations", respectively.

### Identification of a small data communications device

According to some of the example embodiments, the mobility management node (e.g., MME, SGSN or S4-SGSN) may be configured to learn in different ways that a device or its subscription is of a predetermined messaging category and/or is configured to engage in small data communications. There may be one or multiple predetermined messaging categories or types of small data communications.

According to some of the example embodiments, the mobility management node may discover a particular device is configured for messaging and/or small data communications by analysing a subscription parameter(s) indicating a messaging category. The subscription parameter(s) may be sent from the HSS to the mobility management node as part of subscription data, for example, when the device attaches to the network. The subscription parameter(s) may alternatively indicate "messaging only", "small data only", "limited service", etc. A "category" parameter may alternatively be specifying a subclass of a "messaging" subscription.

According to some of the example embodiments, the mobility management node may be configured to identify the small data communications device by analysing a new parameter/indication (e.g., an information element) sent from the device to the network, for example, when it attaches to the network. It may be a device capability (e.g. "messaging category") or an explicit parameter ("messaging category") sent in the NAS message for the Attach Request. A "category" capability/parameter may alternatively be specifying a "category subclass" of a messaging subscription. It may alternatively be a device capability used by the radio network (e.g. "low cost device" or "constrained device") or an explicit parameter ("low cost or constrained device category") sent by the device in the Radio Resource Control protocol to the eNB or radio network controller and forwarded by the eNB/RNC to the mobility management node as part of an Initial UE message or Initial Context Setup Complete message.

According to some of the example embodiments, the mobility management node may be configured to identify that the device is configured for messaging and/or small data communications based on a pre-configuration. Examples of such a pre-configuration may be based on values or ranges of one or more specific parameters (e.g., IMEI, IMSI, Type Approval Code (TAC), etc.) of devices that may be classified as messaging category devices. When a device attaches, device specific parameters are passed in the attach request message to the mobility management node, which may then compare such parameters with its pre-configured values to know if the device may be treated as a messaging/small data communication's category device or not. Each pre-configured value or range may optionally be accompanied by a pre-configured "category subclass" of messaging devices. The pre-configuration data may alternatively be located externally to the mobility management node and be retrieved using some protocol, for example, LDAP.

According to some of the example embodiments, the mobility management node may be configured to identify the device is configured for messaging and/or small data communications based on an examination of multiple parameters from the HSS and/or the device and/or pre-configured data.

It should also be appreciated that the mobility management node may be configured to receive any parameters or identifying information from the M2M device or an eNB. For example the M2M device may provide such parameters or indications to the eNB or RNC via an AS layer protocol. Such information may thereafter be forwarded to the mobility management node. Alternatively, the M2M device may send such information to the mobility management node directly, for example, via NAS signalling or through any other means of communication.

### Function and/or service limitation or disablement

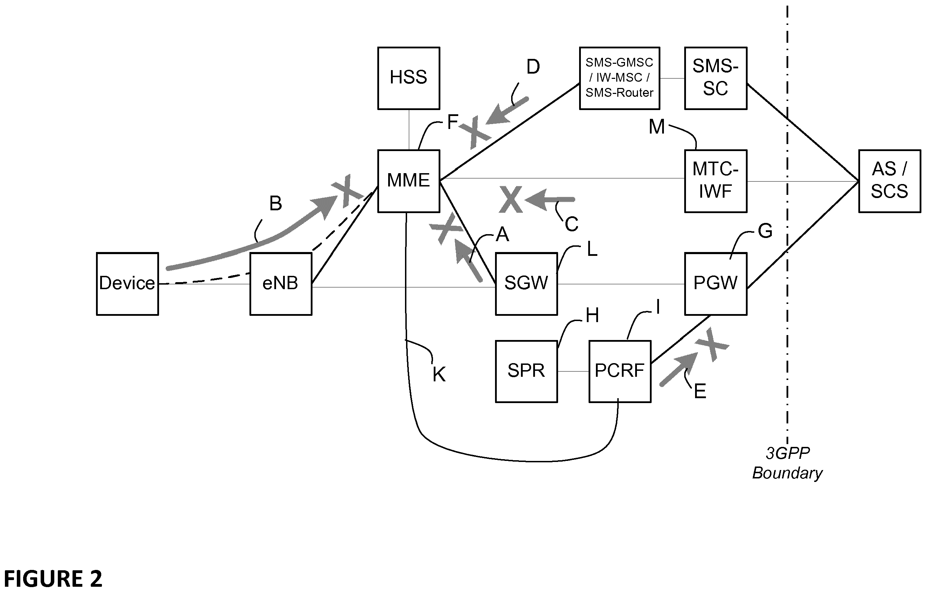

According to some of the example embodiments, the mobility management node may be configured to limit or disable functions and/or services utilized by a device identified as a messaging and/or small data communications device. **Figure 2** illustrates how the network may effectuate such disabling or limiting.

According to some of the example embodiments, the mobility management node may be configured to disabling all bearers and PDN connections associated with the device. In such an example embodiment, EPC bearers and communications between the MME and SGW may be disabled at an Attach request or Tracking Area Update TAU request, as illustrated as B in Figure 2. The device may be limited to T5 communications, for example, communications between the MME and MTC-IWF. And hence no bearer or PDN connection is needed.

According to some of the example embodiments, the mobility management node may be configured to disable all bearers/PDN connections except the default bearer/PDN connection. In such an example embodiment, requests for multiple PDN Connections from the device, for example, a device using a UE requested PDN connectivity procedure as illustrated as B in Figure 2, or PCRF triggered dedicated bearer activations as illustrated as E in Figure 2, may be disabled, thereby saving system resources.

According to some of the example embodiments, the mobility management node may be configured to disable service request which may be sent by the M2M device. Thus, the interface labelled as B in Figure 2 may undergo the limitation.

According to some of the example embodiments, the mobility management node may be configured to limit service to the M2M device by providing traffic shaping based on for example, a MBR, APN-AMBR, packet rate, or a minimum inter packet arrival time, etc. Thus, the nodes which may be affected by this example embodiment are the nodes labelled G and F, as illustrated in Figure 2. The MME effectuates the traffic shaping parameters over the S11 and S5/S8 interfaces according to TS 23.401. Alternatively, affected nodes are F, I and G and MME effectuating the traffic shaping parameters over a new interface between the MME and the PCRF labelled K as illustrated in Figure 2.

According to some of the example embodiments, the mobility management node may be configured to limit what protocol(s) may be used, for example, only allowing a CoAP protocol and/or a MQTT protocol to be used. Thus, the nodes which may be affected by this example embodiment are the nodes labelled F and G as illustrated in Figure 2. The MME effectuates the protocol restrictions over the S11 and S5/S8 interfaces according to TS 23.401. Alternatively affected nodes are F, I and G and MME effectuating the protocol restrictions over a new interface between the MME and the PCRF labelled K as illustrated in Figure 2.

According to some of the example embodiments, the mobility management node may be configured to limit a QoS, for example, by only allowing communications of one specific QCI or specific QCI's. Thus, the node which may be affected by this example embodiment may be nodes F and G, as illustrated in Figure 2. The MME effectuates the QoS limitations over the S11 and S5/S8 interfaces according to TS 23.401. Alternatively affected nodes are F, I and G and MME effectuating the QoS limitations over a new interface between the MME and the PCRF labelled K as illustrated in Figure 2.

According to some of the example embodiments, the mobility management node may be configured to disable all APNs, or a certain APN (e.g., an IMS APN), or limit communications to only specified APNs. Thus, the interface which may be affected by this example embodiment may be interface B, as illustrated in Figure 2. The MME effectuates the APN restriction at the SGW and PGW selection and at the session creation signalling over the S11 and S5/S8 interfaces according to TS 23.401.

According to some of the example embodiments, the mobility management node may be configured to limit services to certain Radio Access Technologies (RATs), for example, LTE only, or LTE & WLAN. Thus, the interface which may be affected by this example embodiment may be interface B, as illustrated in Figure 2, limiting which RATs a device may register in or be handed over to.

According to some of the example embodiments, the mobility management node may be configured to disable CS services, for example, Combined attach/TAU for CSFB, SMS, or IMS. Thus, the interface which may be affected by this example embodiment may be interface B, as illustrated in Figure 2.

According to some of the example embodiments, the mobility management node may be configured to disable SMS except for Mobile Terminated (MT) SMS used for device triggering. Thus, the interface which may be affected by this example embodiment may be interface D, as illustrated in Figure 2.

According to some of the example embodiments, the mobility management node may be configured to disable specific interfaces, for example, Rx (e.g., the interface between the PCRF and the IMS system), SGs (e.g., the interface between the MME and the MSC), and/or S8 (e.g., the interface between the SGW and the PGW used in roaming situations).

According to some of the example embodiments, the mobility management node may be configured to disable roaming. Thus, the interface which may be affected by this example embodiment are interface B, as illustrated in Figure 2.

According to some of the example embodiments, the mobility management node may be configured to disable online charging, all forms of charging, and/or the generation of Charging Data Records (CDR). Thus, the nodes which may be affected by this example embodiment are nodes F, L, G and M, as illustrated in Figure 2. The MME effectuates the charging disabling at the session creation signalling over the S11 and S5/S8 interfaces according to TS 23.401 or by new signalling to the MTC-IWF node.

### Working example A

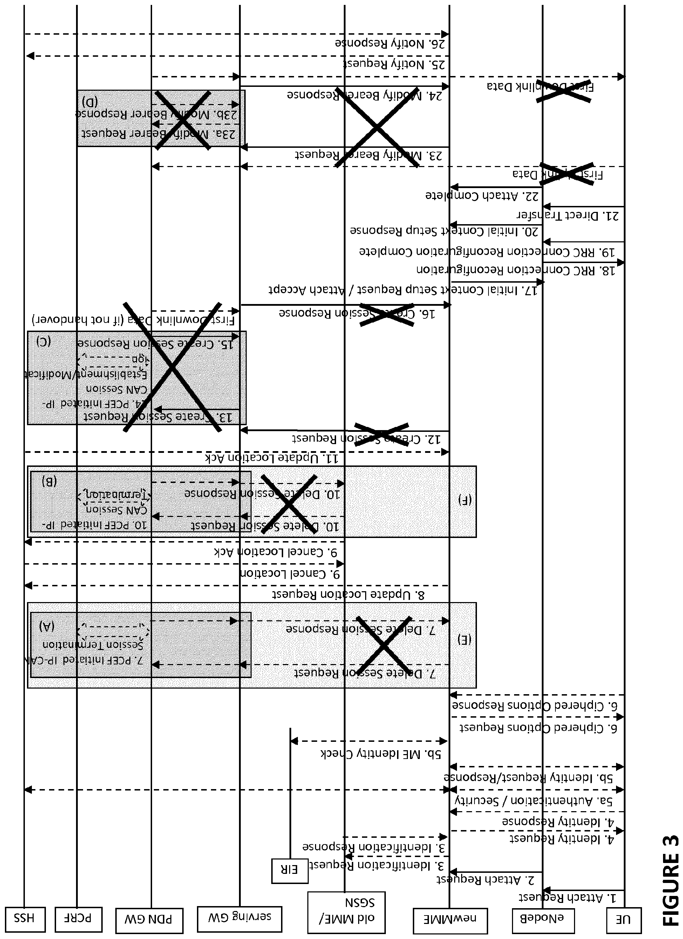

A first working example is provided to better illustrate the example embodiments presented herein. The first working example A, is illustrated in **Figure 3****.** Working example A uses standalone messaging through the MME and a specific messaging GW function (e.g., MTC-IWF or a SMS-SC). This may reduce network resource usage by disabling all bearers/PDN connections including the default bearer/PDN connection during an attach procedure.

Figure 3 illustrates an attach procedure in which default bearer/session are disabled. Specifically, according to working example A, messages labelled 7, 10, 12-16, "First Uplink Data", "First Downlink Data" and 23-24 are omitted from the attached procedure. In message 17, Initial Context Setup Request /Attach Accept, the MME does not include any RABs to setup for the eNB.

### Working example B

Working example B is directed towards messaging through the mobility management node where the mobility management node connects to a SGW to convey the message to or from the destination or source, respectively. Scenarios with certain categories of constrained M2M devices may benefit from disabling additional bearers and PDN connections from being established.

For disabling additional bearers, the mobility management node may reject the dedicated bearer request as described in subclause 5.4.1 in TS 23.401. Specifically, the mobility management node may always reject the Create Bearer Request received from the SGW. For disabling additional sessions, for example, PDN connections, the MME may always reject the PDN Connectivity Request as described in subclause 5.10.2 in TS 23.401. Specifically, the MME may always reject the PDN Connectivity Request received in NAS from the user equipment or M2M device. Working example B may further comprise the disabling of all protocols except CoAP and MQTT, certain services (e.g., Combined Attach/TAU for CSFB) and/or certain types of APNs (e.g., IMS APN).

### Working example C

Working example C is directed towards only allowing the default bearer and disabling all other bearers/PDN connections. Such a configuration may be referred to as a small data fast path solution which may benefit from disabling Service Requests moving the M2M device to an ECM-CONNECTED mode in the MME and SGW. When the MME receives a M2M device triggered Service Request, as described in subclause 5.3.4.1 in TS 23.401, for example, the NAS Service Request in step 2, the MME may either ignore the Service Request, or send back a message with a release command to the eNB so that the eNB may send a RRC Connection Release to the M2M device. An appropriate cause code would tell the M2M device that the Service Request has been rejected and that messaging (using small data fast path / connection less) is the only allowed service.

Similarly a Network Triggered service request received from the SGW as described in clause 5.2.4.3 in TS 23.402, for example, a Downlink Data Notification, without any special indication that the DL data is "small data", would be rejected by the MME by sending a Downlink Data Notification reject message back to the SGW. Alternatively, the MME may proceed with paging, but convert and do a paging for "small data" instead. The device will then respond according to the small data fast path procedures, for example, as explained in chapter 5.1.1.3.6.2.1 in TR 23.887. No service request will be sent to the MME.

Furthermore, working example C may also make use of a messaging category which may indicate a disabling of all protocols except CoAP and/or MQTT (or other specific protocols), disabling CS services, limiting QoS and limiting MBR, packets per minute or packet per hour, etc.

Rejection may in general be done using reject code rejecting the request service for the Tracking Area (TA) to stop the device for retrying in the specific area . One example advantage of disabling or limiting services based on a messaging category, instead of disabling each service individually in the HSS, is a high flexibility and granularity on how the service limitation is done. This also enables equipment vendors to implement additional and specific service limitations without the need of changing the 3GPP standardization.

### Example node configuration

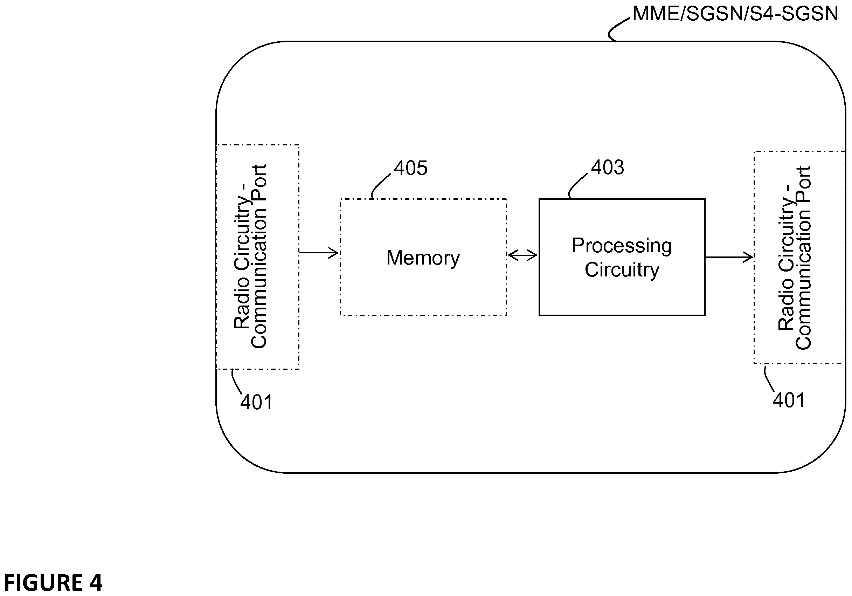

**Figure 4** illustrates an example node configuration of a mobility management node which may be a MME 115, a SGSN 111 or a S4-SGSN 110. The mobility management node may perform some of the example embodiments described herein. The mobility management node may comprise radio circuitry or a communication port 401 that may be configured to receive and/or transmit communication data, instructions, and/or messages. It should be appreciated that the radio circuitry or communication port 401 may be comprised as any number of transceiving, receiving, and/or transmitting units or circuitry. It should further be appreciated that the radio circuitry or communication 401 may be in the form of any input or output communications port known in the art. The radio circuitry or communication 401 may comprise RF circuitry and baseband processing circuitry (not shown).

The mobility management node may also comprise a processing unit or circuitry 403 which may be configured to provide management of small data communications as described herein. The processing circuitry 403 may be any suitable type of computation unit, for example, a microprocessor, digital signal processor (DSP), field programmable gate array (FPGA), or application specific integrated circuit (ASIC), or any other form of circuitry. The mobility management node may further comprise a memory unit or circuitry 405 which may be any suitable type of computer readable memory and may be of volatile and/or non-volatile type. The memory 405 may be configured to store received, transmitted, and/or measured data, device parameters, communication priorities, and/or executable program instructions.

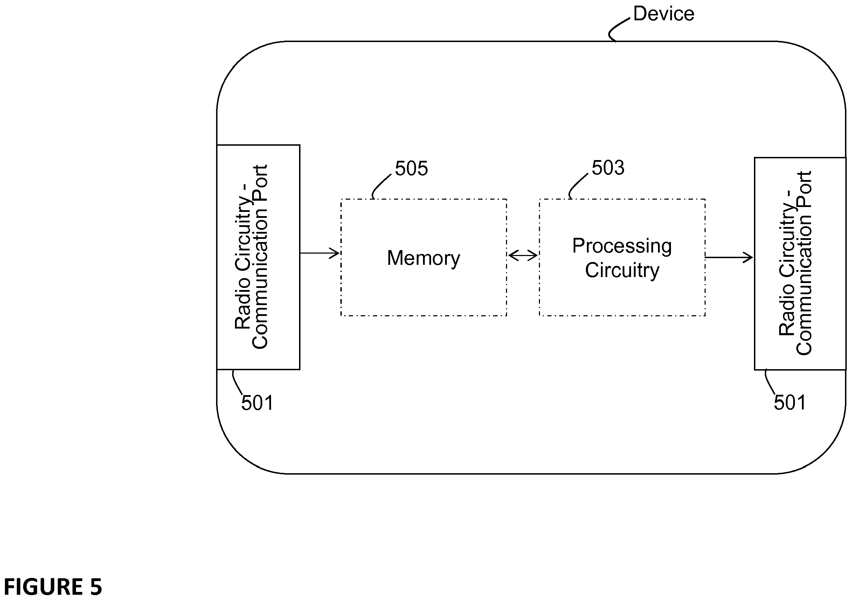

**Figure 5** illustrates an example node configuration of a M2M device which may perform some of the example embodiments described herein. The M2M device may comprise radio circuitry or a communication port 501 that may be configured to receive and/or transmit communication data, instructions, and/or messages. It should be appreciated that the radio circuitry or communication port 501 may be comprised as any number of transceiving, receiving, and/or transmitting units or circuitry. It should further be appreciated that the radio circuitry or communication 501 may be in the form of any input or output communications port known in the art. The radio circuitry or communication 501 may comprise RF circuitry and baseband processing circuitry (not shown).

The M2M device may also comprise a processing unit or circuitry 503 which may be configured to receive managed small data communications as described herein. The processing circuitry 503 may be any suitable type of computation unit, for example, a microprocessor, digital signal processor (DSP), field programmable gate array (FPGA), or application specific integrated circuit (ASIC), or any other form of circuitry. The MTC-IWF node may further comprise a memory unit or circuitry 505 which may be any suitable type of computer readable memory and may be of volatile and/or non-volatile type. The memory 505 may be configured to store received, transmitted, and/or measured data, device parameters, communication priorities, and/or executable program instructions.

### Example node operations

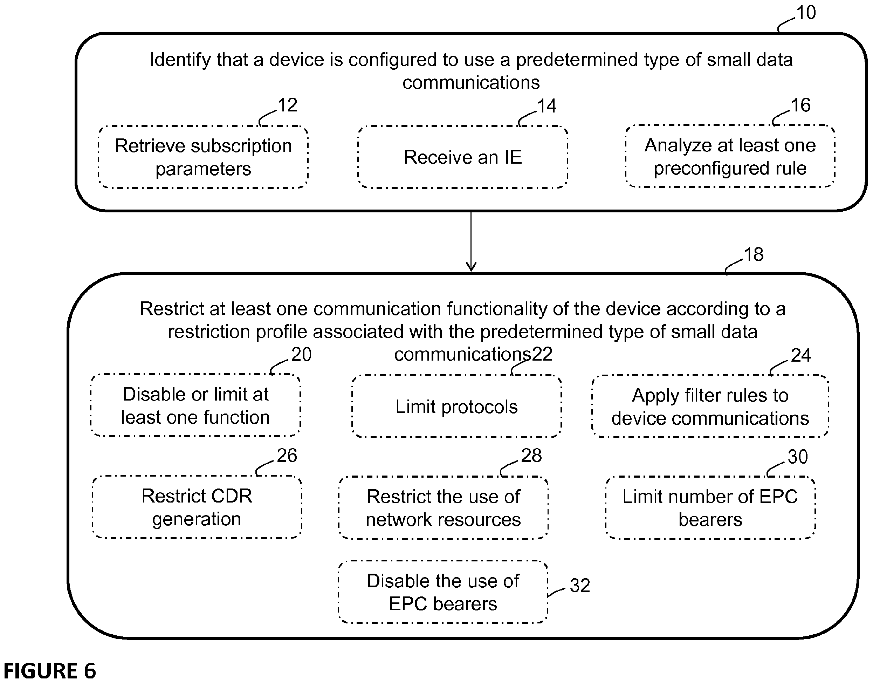

**Figure 6** is a flow diagram depicting example operations which may be taken by the mobility management node as described herein for managing small data communications. It should also be appreciated that Figure 6 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination.

### Operation 10

The mobility management node is configured to identify that a device is configured to use a predetermined type of small data communications. The processing circuitry 403 is configured to identify that the device is configured to use the predetermined type of small data communications. Non-limiting examples of identifying the device as being configured for small data communications is provided at least under the subheading "Identification of a small data communications device".

### Example operation 12

According to some of the example embodiments, the identifying 10 further comprises retrieving 12 subscription parameters from a HSS. The subscription parameters identifying the device as being configured for the predetermined type of small data communications. The processing circuitry 403 is configured to retrieve the subscription parameters from the HSS. It should also be appreciated that the identifying 10 may also be provided by receiving an information element from a serving base station.

### Example operation 14

According to some of the example embodiments, the identifying 10 further comprises receiving 14, from the device or a base station, an information element identifying the device as being configured for the predetermine type of small data communications. The radio circuitry 401 is configured to receive, from the device or a base station, the information element identifying the device as being configured for the predetermined type of small data communications.

### Example operation 16

According to some of the example embodiments, the identifying 10 further comprises analyzing 16 at least one preconfigured rule based on at least one device specific parameter. The processing circuitry 403 is configured to analyze at least one preconfigured rule based on at least one device specific parameter.

### Operation 18

The mobility management node is further configured to restrict 18 at least one communication functionality of the device according to a restriction profile associated with the predetermined type of small data communications. The processing circuitry 403 is configured to restrict at least one communication functionality of the device according to a restriction profile associated with the predetermined type of small data communications. Non-limiting examples of communication functionality restriction is provided under at least the subheading "Function and/or service limitation or disablement".

### Example operation 20

According to some of the example embodiments, the restricting 18 may further comprise disabling or limiting 20 at least one type of function useable by the device. The processing circuitry 403 may be configured to disable or limit 20 at least one type of function useable by the device. According to some of the example embodiments, the at least one type of function may be a voice and/or SMS service.

### Example operation 22

According to some of the example embodiments, the restricting 18 may further comprise limiting 22 the device to using only one or a limited set of predefined protocols. The processing circuitry 403 may be configured to effectuate a restriction in the network (e.g. in the PGW) to limit the device to using only one or a limited set of predefined protocols.

### Example operation 24

According to some of the example embodiments, the restricting 18 may further comprise applying 24 filter rules to communications to and from the device. The filter rules restrict the communications to a limited set of predefined source and destination IP addresses. The processing circuitry 403 is configured to effectuate a restriction in the network (e.g. in the PGW) to apply the filter rules to communications to and from the device.

### Example operation 26

According to some of the example embodiments, the restricting 18 may further comprise restricting 26 CDR generation associated with the device. The processing circuitry 403 may be configured to effectuate a restriction in network nodes to restrict CDR generation associated with the device.

### Example operation 28

According to some of the example embodiments, the restricting 18 may further comprise restricting 28 a use of network resources based on at least an associated QoS, a maximum bit rate and/or a maximum packet rate. The processing circuitry 403 may be configured to effectuate a restriction in the network (e.g. in the PGW) of use of network resources based on at least the associated QoS, maximum bit rate and/or the maximum packet rate.

### Example operation 30

According to some of the example embodiments, the restricting 18 may further comprise limiting 30 the device to using only one or a reduced number of EPC bearer(s). The processing circuitry 403 is configured to limit the device to using only one or a reduced number of EPC bearer(s).

### Example operation 32

According to some of the example embodiments, the restricting 18 may further comprise disabling 32 the device from using any EPC bearers. The processing circuitry may be configured to disable the device from using any EPC bearers.

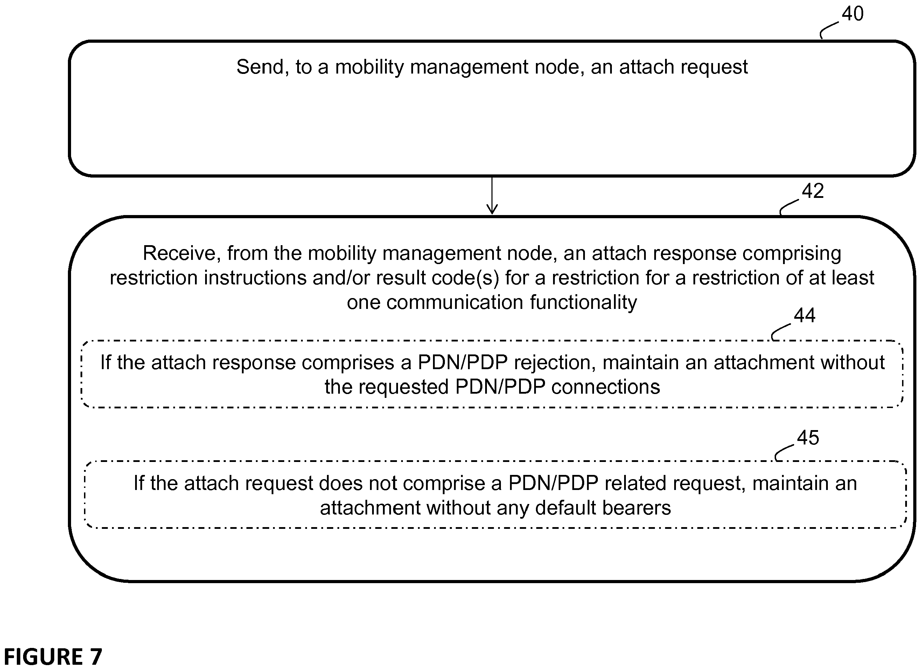

**Figure 7** is a flow diagram depicting example operations which may be taken by the device as described herein for receiving managed small data communications. It should also be appreciated that Figure 7 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination.

### Operation 40

The device is configured to send 40, to a mobility management node, an attach request. The radio circuitry 501 is configured to send, to the mobility management node, the attach request.

According to some of the example embodiments, the attach request may comprise an information element indicating that the device is configured for small data communications of the predetermined type. According to some of the example embodiments, the attach request may solely be an attach request message without any PDN connectivity request messages comprised in the ESM message container information element to request PDN connectivity, thereby not requesting any default EPS bearers nor any dedicated EPS bearers during network attachment. According to some of the example embodiments, the attach request may be a attach request message together with a PDN connectivity request message comprised in the ESM message container information element to request PDN connectivity, thereby requesting a default EPS bearer during network attachment.

### Operation 42

The device is further configured to receive 42, from the mobility management node, an attach response. The attach response comprises restriction instructions and/or result code(s) for a restriction and/or implicit restriction (e.g. in that the attach is accepted without a default EPS bearer) of at least one communication functionality associated with the device. The restriction is based on a predetermined type of small data communications the device is configured to engage it. The radio circuitry 501 is configured to receive, from the mobility management node, the attach response.

According to some of the example embodiments, the restriction of the at least one communication functionality may comprise a limitation or disabling of at least one type of function useable by the device. According to some of the example embodiments, the at least one type of function may be a voice and/or SMS service.

According to some of the example embodiments, the restriction may comprise a limitation on the device to use only one or a limited set of pre-defined protocols.

According to some of the example embodiments, the restriction may comprise a restriction on a use of network resources based on at least an associated QoS, a maximum bit rate and/or a maximum packet rate.

According to some of the example embodiments, the restriction may comprise limiting the device to using only one or a reduced number of EPC bearer(s).

According to some of the example embodiments, the restriction may comprise disabling the device from using any EPC bearers.

### Example operation 44

According to some of the example embodiments, the attach request comprises a request for a default EPS bearer during network attachment. In such example embodiments, the device may be configured to maintain 44 a network attachment, without the requested default EPS bearer, upon the receipt of an attach accept message with a PDN connectivity reject message comprised in the ESM message container information element. The processing circuitry 503 may be configured to maintain the network attachment, without the requested default EPS bearer upon receipt of an attach accept message with the PDN connectivity reject message comprised in the ESM message container information element.

### Example operation 45

According to some of the example embodiments the attach request may solely be an attach request message without any PDN connectivity request messages comprised in the ESM message container information element to request PDN connectivity, thereby not requesting any default EPS bearer(s). In such example embodiments, the device may be configured to maintain 45 the network attachment, without the any default EPS bearer(s), upon the receipt of an attach accept message without any PDN connectivity reject messages comprised in the ESM message container information element or without any ESM message container information element in the message at all. The processing circuitry 503 may be configured to maintain the network attachment, without any default EPS bearer(s), upon the receipt of an attach accept message without any PDN connectivity reject messages comprised in the ESM message container information element or without any ESM message container information element in the message at all.

### Conclusion

It should be appreciated that the term used in TR 23.887 is "small data". The definition of "small data" makes small data ideal for messaging type of applications; however it does not preclude applications with a different way of communicating but which still send or receive small amounts of data. "Messaging", in the context of the example embodiments presented herein, may be described as IP based or non-IP based sending and/or receiving small amounts of data. Any form of messaging protocol may be used to exchange messages or small amounts of data. For IP based messaging UDP is predominantly used as transport protocol, but TCP, SCTP or other transport protocol may also be used.

It should be noted that although terminology from 3GPP LTE has been used herein to explain the example embodiments, this should not be seen as limiting the scope of the example embodiments to only the aforementioned system. Other wireless systems, including WCDMA, WiMax, UMB, WiFi and GSM, may also benefit from the example embodiments disclosed herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Also note that terminology such as user equipment should be considered as non-limiting. A device or user equipment as the term is used herein, is to be broadly interpreted to include a radiotelephone having ability for Internet/intranet access, web browser, organizer, calendar, a camera (e.g., video and/or still image camera), a sound recorder (e.g., a microphone), and/or global positioning system (GPS) receiver; a personal communications system (PCS) user equipment that may combine a cellular radiotelephone with data processing; a personal digital assistant (PDA) that can include a radiotelephone or wireless communication system; a laptop; a camera (e.g., video and/or still image camera) having communication ability; and any other computation or communication device capable of transceiving, such as a personal computer, a home entertainment system, a television, etc. It should be appreciated that the term user equipment may also comprise any number of connected devices. Furthermore, it should be appreciated that the term 'user equipment' shall be interpreted as defining any device which may have an internet or network access.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

## Claims

1. A method, in a mobility management node, for regulating small data communications in a network, the method comprising:
identifying **(10)** a device being configured to use a predetermined type of small data communications; and
restricting **(18)** at least one communication functionality of the device according to a restriction profile associated with the predetermined type of small data communications.

2. The method of claim 1, wherein the identifying **(10)** further comprises retrieving **(12)** subscription parameters from a Home Subscriber Server, HSS, said subscription parameters identifying the device as being configured for the predetermined type of small data communications.

3. The method of any one of claims 1-2, wherein the identifying **(10)** further comprises receiving **(14),** from the device or a base station, an information element identifying the device as being configured for the predetermined type of small data communications.

4. The method of any one of claims 1-3, wherein the identifying **(10)** further comprises analysing **(16)** at least one preconfigured rule based on at least one device specific parameter.

5. The method of any one of claims 1-4, wherein the restricting **(18)** further comprises disabling or limiting **(20)** at least one type of function useable by the device.

6. The method of claim 5, wherein the at least one type of function is a voice and/or Short Message Service, SMS, service.

7. The method of any of claims 1-6, wherein the restricting **(18)** further comprises limiting **(22)** the device to using only one or a limited set of predefined protocols.

8. The method of any of claims 1-7, wherein the restricting **(18)** further comprises applying **(24)** filter rules to communications to and from the device, wherein said filter rules restrict said communications to a limited set of predefined source and destination Internet Protocol, IP, addresses.

9. The method of any of claims 1-8, wherein the restricting **(18)** further comprises restricting **(26)** Charging Data Record, CDR, generation associated with the device.

10. The method of any of claims 1-9, wherein the restricting **(18)** further comprises restricting **(28)** a use of network resources based on at least an associated Quality of Service, QoS, a maximum bit rate, and/or a maximum packet rate.

11. The method of any of claims 1-10, wherein the restricting **(18)** further comprises limiting **(30)** the device to using only one or a reduced number of Evolved Packet Core, EPC, bearer(s).

12. The method of any of claims 1-11, wherein the restricting **(18)** further comprises disabling **(32)** the device from using any Evolved Packet Core, EPC, bearers.

13. A mobility management node for regulating small data communications in a network, the mobility management node comprising:
processing circuitry **(403)** configured to identify a device being configured to use a predetermined type of small data communications; and
the processing circuitry **(403)** further configured to restrict at least one communication functionality of the device according to a restriction profile associated with the predetermined type of small data communications.

14. The mobility management node of claim 13, wherein the processing circuitry **(403)** is further configured to retrieve subscription parameters from a Home Subscriber Server, HSS, wherein said subscription parameters identify the device as being configured for the predetermined type of small data communications.

15. The mobility management node of any one of claims 13-14, further comprising radio circuitry **(401)** configured to receive, from the device or a base station, an information element identifying the device as being configured for the predetermined type of small data communications.

16. The mobility management node of any one of claims 13-15, wherein the processing circuitry **(403)** is further configured to perform the method of any of claims 4-12.

17. A method, in a device configured for small data communications in a network, the device being in communication with a Long-Term Evolution, LTE, based network, the method comprising:
sending **(40),** to a mobility management node, an attach request; and
receiving **(42),** from the mobility management node, an attach response, said attach response comprising restriction instructions and/or result code(s) for a restriction of at least one communication functionality associated with the device based on a predetermined type of small data communications the device is configured to engage in and/or an implicit restriction in that the attach request is accepted without a default Evolved Packet System, EPS, bearer.

18. The method of claim 17, wherein the attach request is a request for network attachment without a request for a default EPS bearer.

19. The method of claim 17, wherein the attach request is a request for network attachment with a request for a default EPS bearer and the attach response comprises an attach accept and a Packet Data Network, PDN, connection establishment rejection message.

20. The method of claim 18 or 19, further comprising maintaining **(44)** a network attachment, without any default EPS bearer(s) or dedicated bearer(s), upon a receipt of an attach accept with a PDN connection establishment rejection message or an attach accept without any PDN connectivity related message(s).

21. The method of any of claims 17-20, wherein the attach request further comprises an information element indicating that the device is configured for small data communications of the predetermined type.

22. The method of any one of claims 17-21, wherein the restriction of the at least one communication functionality comprises a limitation or disabling of at least one type of function useable by the device.

23. The method of claim 22, wherein the at least one type of function is a voice and/or Short Message Service, SMS, service.

24. The method of any of claims 17-23, wherein the restriction of the at least one communication functionality comprises a limitation on the device to use only one or a limited set of pre-defined protocols.

25. The method of any of claims 17-24, wherein the restriction of the at least one communication functionality comprises a restriction on a use of network resources based on at least an associated Quality of Service, QoS, a maximum bit rate, and/or a maximum packet rate.

26. The method of any of claims 17-25, wherein the restriction of the at least one communication functionality comprises limiting the device to using only one or a reduced number of Evolved Packet Core, EPC, bearer(s).

27. The method of any of claims 17-26, wherein the restriction of the at least one communication functionality comprises disabling the device from using any Evolved Packet Core, EPC, bearers.

28. A device configured for small data communications in a network, the device being in communication with a Long-Term Evolution, LTE, based network, the device comprising:
radio circuitry **(501)** configured to send, to a mobility management node, an attach request; and
the radio circuitry **(501)** configured to receive, from the mobility management node, an attach response, said attach response comprising restriction instructions and/or result code(s) for a restriction of at least one communication functionality associated with the device based on a predetermined type of small data communications the device is configured to engage in and/or an implicit restriction in that the attach request is accepted without a default Evolved Packet System, EPS, bearer.

29. The device of claim 28, wherein the attach request is a request for network attachment without a request for a default EPS bearer.

30. The device of claim 29, wherein the attach request is a request for network attachment with a request for a default EPS bearer and the attach response comprises an attach accept and a Packet Data Network, PDN, connection establishment rejection message.

31. The device of claim 29 or 30, further comprising processing circuitry **(503)** configured to maintain a network attachment, without any default EPS bearer(s) or dedicated bearer(s), upon a receipt of an attach accept with a PDN connection establishment rejection message or an attach accept without any PDN connectivity related message(s).

32. The device of any of claims 29-31, further being configured to perform the method of claims 21-27.

## Patentansprüche

1. Verfahren in einem Mobilitätsmanagementknoten zum Regulieren kleiner Datenkommunikationen in einem Netzwerk, wobei das Verfahren umfasst:
Identifizieren (10) eines Geräts, das konfiguriert ist, um einen vorbestimmten Typ von kleinen Datenkommunikationen zu verwenden; und
Beschränken (18) zumindest einer Kommunikationsfunktionalität des Geräts gemäß einem Beschränkungsprofil, das dem vorbestimmten Typ von kleinen Datenkommunikationen zugeordnet ist.

2. Verfahren nach Anspruch 1, wobei das Identifizieren (10) weiter ein Abrufen (12) von Subskriptionparametern von einem Heim-Teilnehmer-Server, HSS, umfasst, wobei die Subskriptionparameter das Gerät als für den vorbestimmten Typ von kleinen Datenkommunikationen konfiguriert identifizieren.

3. Verfahren nach einem der Ansprüche 1-2, wobei das Identifizieren (10) weiter ein Empfangen (14) eines Informationselements, das das Gerät als für den vorbestimmten Typ von kleinen Datenkommunikationen konfiguriert identifiziert, von dem Gerät oder einer Basisstation umfasst.

4. Verfahren nach einem der Ansprüche 1-3, wobei das Identifizieren (10) weiter ein Analysieren (16) zumindest einer vorkonfigurierten Regel basierend auf zumindest einem gerätespezifischen Parameter umfasst.

5. Verfahren nach einem der Ansprüche 1-4, wobei das Beschränken (18) weiter ein Deaktivieren oder Begrenzen (20) zumindest eines Typs von Funktion, die durch das Gerät verwendbar ist, umfasst.

6. Verfahren nach Anspruch 5, wobei der zumindest eine Typ von Funktion ein Sprach- und/oder Kurznachrichtendienst-, SMS, Dienst ist.

7. Verfahren nach einem der Ansprüche 1-6, wobei das Beschränken (18) weiter ein Begrenzen (22) des Geräts auf ein Verwenden von nur einem oder einem begrenzten Satz von vordefinierten Protokollen umfasst.

8. Verfahren nach einem der Ansprüche 1-7, wobei das Beschränken (18) weiter ein Anwenden (24) von Filterregeln auf Kommunikationen zu und von dem Gerät umfasst, wobei die Filterregeln die Kommunikationen auf einen begrenzten Satz von vordefinierten Quell- und Bestimmungsort-Internet-Protokoll-, IP, Adressen beschränken.

9. Verfahren nach einem der Ansprüche 1-8, wobei das Beschränken (18) weiter ein Beschränken (26) einer mit dem Gerät verbundenen Gebührenerfassungsdatensatz-, CDR, Erzeugung umfasst.

10. Verfahren nach einem der Ansprüche 1-9, wobei das Beschränken (18) weiter ein Beschränken (28) einer Verwendung von Netzwerkressourcen basierend auf zumindest einer zugeordneten Dienstgüte, QoS, einer maximalen Bitrate und/oder einer maximalen Paketrate umfasst.

11. Verfahren nach einem der Ansprüche 1-10, wobei das Beschränken (18) weiter ein Begrenzen (30) des Geräts auf ein Verwenden von nur einem oder einer begrenzten Anzahl von Evolved-Packet-Core-, EPC, Träger(n) umfasst.

12. Verfahren nach einem der Ansprüche 1-11, wobei das Beschränken (18) weiter ein Deaktivieren (32) des Geräts vom Verwenden jeglicher Evolved-Packet-Core-, EPC, Träger umfasst.

13. Mobilitätsmanagementknoten zum Regulieren kleiner Datenkommunikationen in einem Netzwerk, wobei der Mobilitätsmanagementknoten umfasst:
eine Verarbeitungsschaltung (403), die konfiguriert ist, um ein Gerät, das konfiguriert ist, um einen vorbestimmten Typ von kleinen Datenkommunikationen zu verwenden, zu identifizieren; und
wobei die Verarbeitungsschaltung (403) weiter konfiguriert ist, um zumindest eine Kommunikationsfunktionalität des Geräts gemäß einem Beschränkungsprofil, das dem vorbestimmten Typ von kleinen Datenkommunikationen zugeordnet ist, zu beschränken.

14. Mobilitätsmanagementknoten nach Anspruch 13, wobei die Verarbeitungsschaltung (403) weiter konfiguriert ist, um Subskriptionparameter von einem Heim-Teilnehmer-Server, HSS, abzurufen, wobei die Subskriptionparameter das Gerät als für den vorbestimmten Typ von kleinen Datenkommunikationen konfiguriert identifizieren.

15. Mobilitätsmanagementknoten nach einem der Ansprüche 13-14, weiter umfassend eine Funkschaltung (401), die konfiguriert ist, um von dem Gerät oder einer Basisstation ein Informationselement, das das Gerät als für den vorbestimmten Typ von kleinen Datenkommunikationen konfiguriert identifiziert, zu empfangen.

16. Mobilitätsmanagementknoten nach einem der Ansprüche 13-15, wobei die Verarbeitungsschaltung (403) weiter konfiguriert ist, um das Verfahren nach einem der Ansprüche 4-12 durchzuführen.

17. Verfahren in einem Gerät, das für kleine Datenkommunikationen in einem Netzwerk konfiguriert ist, wobei das Gerät mit einem Long-Term-Evolution, LTE, basierten Netzwerk in Verbindung steht, wobei das Verfahren umfasst:
Senden (40) einer Anschlussanfrage an einen Mobilitätsmanagementknoten; und
Empfangen (42) einer Anschlussantwort von dem Mobilitätsmanagementknoten, wobei die Anschlussantwort Beschränkungsanweisungen und/oder einen oder mehrere Ergebniscode(s) für eine Beschränkung von zumindest einer Kommunikationsfunktionalität, die dem Gerät zugeordnet ist, umfasst, wobei das Gerät, basierend auf einem vorbestimmten Typ von kleinen Datenkommunikationen, konfiguriert ist, um in Eingriff zu kommen und/oder eine implizite Beschränkung vorzunehmen, in der die Anschlussanfrage ohne einen standardmäßigen Evolved-Packet-System-, EPS, Träger akzeptiert wird.

18. Verfahren nach Anspruch 17, wobei die Anschlussanfrage eine Anfrage nach einem Netzwerkanschluss ohne eine Anfrage nach einem standardmäßigen EPS-Träger ist.

19. Verfahren nach Anspruch 17, wobei die Anschlussanfrage eine Anfrage nach einem Netzwerkanschluss mit einer Anfrage nach einem standardmäßigen EPS-Träger ist und die Anschlussantwort eine Anschlussannahme und eine Paket-Daten-Netzwerk-, PDN, Verbindungsaufbau-Ablehnungsnachricht umfasst.

20. Verfahren nach Anspruch 18 oder 19, weiter umfassend Beibehalten (44) eines Netzwerkanschlusses ohne einen oder mehrere standardmäßige EPS-Träger oder einen oder mehrere dedizierte Träger bis zu einem Empfang einer Anschlussannahme mit einer PDN-Verbindungsaufbau-Ablehnungsnachricht oder einer Anschlussannahme ohne eine oder mehrere PDN-verbindungsbezogene Nachricht(en).

21. Verfahren nach einem der Ansprüche 17-20, wobei die Anschlussanfrage weiter ein Informationselement umfasst, das anzeigt, dass das Gerät für kleine Datenkommunikationen des vorbestimmten Typs konfiguriert ist.

22. Verfahren nach einem der Ansprüche 17-21, wobei die Beschränkung der zumindest einen Kommunikationsfunktionalität eine Begrenzung oder ein Deaktivieren von zumindest einem Typ von Funktion, die durch das Gerät verwendbar ist, umfasst.

23. Verfahren nach Anspruch 22, wobei der zumindest eine Typ von Funktion ein Sprach- und/oder Kurznachrichtendienst-, SMS, Dienst ist.

24. Verfahren nach einem der Ansprüche 17-23, wobei die Beschränkung der zumindest einen Kommunikationsfunktionalität eine Begrenzung auf dem Gerät umfasst, um nur ein oder einen begrenzten Satz von vordefinierten Protokollen zu verwenden.

25. Verfahren nach einem der Ansprüche 17-24, wobei die Beschränkung der zumindest einen Kommunikationsfunktionalität ein Beschränken auf eine Verwendung von Netzwerkressourcen basierend auf zumindest einer zugeordneten Dienstgüte, QoS, einer maximalen Bitrate und/oder einer maximalen Paketrate umfasst.

26. Verfahren nach einem der Ansprüche 17-25, wobei die Beschränkung der zumindest einen Kommunikationsfunktionalität ein Begrenzen des Geräts zum Verwenden von nur einem oder einer begrenzten Anzahl von Evolved-Packet-Core-, EPC, Träger(n) umfasst.

27. Verfahren nach einem der Ansprüche 17-26, wobei die Beschränkung der zumindest einen Kommunikationsfunktionalität ein Deaktivieren des Geräts vom Verwenden jeglicher Evolved-Packet-Core-, EPC, Träger umfasst.

28. Gerät, das für kleine Datenkommunikationen in einem Netzwerk konfiguriert ist, wobei das Gerät mit einem mit einem Long-Term-Evolution, LTE, basierten Netzwerk in Verbindung steht, wobei das Gerät umfasst:
eine Funkschaltung (501), die konfiguriert ist, um eine Anschlussanfrage an einen Mobilitätsmanagementknoten zu senden; und
wobei die Funkschaltung (501) konfiguriert ist, um eine Anschlussantwort von dem Mobilitätsmanagementknoten zu empfangen, wobei die Anschlussantwort Beschränkungsanweisungen und/oder einen oder mehrere Ergebniscode(s) für eine Beschränkung von zumindest einer Kommunikationsfunktionalität, die dem Gerät zugeordnet ist, umfasst, wobei das Gerät, basierend auf einem vorbestimmten Typ von kleinen Datenkommunikationen, konfiguriert ist, um in Eingriff zu kommen und/oder eine implizite Beschränkung vorzunehmen, in der die Anschlussanfrage ohne einen standardmäßigen Evolved-Packet-System-, EPC, Träger akzeptiert wird.

29. Gerät nach Anspruch 28, wobei die Anschlussanfrage eine Anfrage nach einem Netzwerkanschluss ohne eine Anfrage nach einem standardmäßigen EPS-Träger ist.

30. Gerät nach Anspruch 29, wobei die Anschlussanfrage eine Anfrage nach einem Netzwerkanschluss mit einer Anfrage nach einem standardmäßigen EPS-Träger ist und die Anschlussantwort eine Anschlussannahme und eine Paket-Daten-Netzwerk-, PDN, Verbindungsaufbau-Ablehnungsnachricht umfasst.

31. Gerät nach Anspruch 29 oder 30, weiter umfassend eine Verarbeitungsschaltung (503), die konfiguriert ist, um einen Netzwerkanschluss ohne einen oder mehrere standardmäßige EPS-Träger oder einen oder mehrere dedizierte Träger bis zu einem Empfang einer Anschlussannahme mit einer PDN-Verbindungsaufbau-Ablehnungsnachricht oder einer Anschlussannahme ohne eine oder mehrere PDN-verbindungsbezogene Nachricht(en) beizubehalten.

32. Gerät nach einem der Ansprüche 29-31, das weiter konfiguriert ist, um das Verfahren nach den Ansprüchen 21-27 durchzuführen.

## Revendications

1. Procédé, dans un noeud de gestion de mobilité, pour réguler des communications de faibles quantités de données dans un réseau, le procédé comprenant :
l'identification (10) d'un dispositif qui est configuré pour utiliser un type prédéterminé de communications de faibles quantités de données ; et
la restriction (18) d'au moins une fonctionnalité de communication du dispositif en fonction d'un profil de restriction associé au type prédéterminé de communications de faibles quantités de données.

2. Procédé selon la revendication 1, dans lequel l'identification (10) comprend en outre une récupération (12) de paramètres d'abonnement à partir d'un serveur d'abonné résidentiel, HSS, lesdits paramètres d'abonnement identifiant le dispositif comme étant configuré pour le type prédéterminé de communications de faibles quantités de données.

3. Procédé selon l'une quelconque des revendications 1 et 2, dans lequel l'identification (10) comprend en outre une réception (14), à partir du dispositif ou d'une station de base, d'un élément d'information identifiant le dispositif comme étant configuré pour le type prédéterminé de communications de faibles quantités de données.

4. Procédé selon l'une quelconque des revendications 1 à 3, dans lequel l'identification (10) comprend en outre une analyse (16) d'au moins une règle préconfigurée sur la base d'au moins un paramètre spécifique au dispositif.

5. Procédé selon l'une quelconque des revendications 1 à 4, dans lequel la restriction (18) comprend en outre une désactivation ou une limitation (20) d'au moins un type de fonction utilisable par le dispositif.

6. Procédé selon la revendication 5, dans lequel l'au moins un type de fonction est un service vocal et/ou de service de messages courts, SMS.

7. Procédé selon l'une quelconque des revendications 1 à 6, dans lequel la restriction (18) comprend en outre une limitation (22) du dispositif pour utiliser un seul ou un ensemble limité de protocoles prédéfinis.

8. Procédé selon l'une quelconque des revendications 1 à 7, dans lequel la restriction (18) comprend en outre une application (24) de règles de filtrage à des communications vers et à partir du dispositif, dans lequel lesdites règles de filtrage restreignent lesdites communications à un ensemble limité d'adresses de protocole Internet, IP, d'origine et de destination.

9. Procédé selon l'une quelconque des revendications 1 à 8, dans lequel la restriction (18) comprend en outre une restriction (26) d'une génération d'enregistrement de données de facturation, CDR, associée au dispositif.

10. Procédé selon l'une quelconque des revendications 1 à 9, dans lequel la restriction (18) comprend en outre une restriction (28) d'une utilisation de ressources de réseau sur la base au moins d'une qualité de service, QoS, associée, d'un débit binaire maximal et/ou d'un débit de paquets maximal.

11. Procédé selon l'une quelconque des revendications 1 à 10, dans lequel la restriction (18) comprend en outre une limitation (30) du dispositif pour utiliser une seule ou un nombre réduit de porteuses de réseau central par paquets évolué, EPC.

12. Procédé selon l'une quelconque des revendications 1 à 11, dans lequel la restriction (18) comprend en outre une désactivation (32) du dispositif pour utiliser des quelconques porteuses de réseau central par paquets évolué, EPC.

13. Noeud de gestion de mobilité pour réguler des communications de faibles quantités de données dans un réseau, le noeud de gestion de mobilité comprenant :
une circuiterie de traitement (403) configurée pour identifier un dispositif qui est configuré pour utiliser un type prédéterminé de communications de faibles quantités de données ; et
la circuiterie de traitement (403) étant configurée en outre pour restreindre au moins une fonctionnalité de communication du dispositif en fonction d'un profil de restriction associé au type prédéterminé de communications de faibles quantités de données.

14. Noeud de gestion de mobilité selon la revendication 13, dans lequel la circuiterie de traitement (403) est configurée en outre pour récupérer des paramètres d'abonnement à partir d'un serveur d'abonné résidentiel, HSS, dans lequel lesdits paramètres d'abonnement identifiant le dispositif comme étant configuré pour le type prédéterminé de communications de faibles quantités de données.

15. Noeud de gestion de mobilité selon l'une quelconque des revendications 13 et 14, comprenant en outre une circuiterie radio (401) configurée pour recevoir, à partir du dispositif ou d'une station de base, un élément d'information identifiant le dispositif comme étant configuré pour le type prédéterminé de communications de faibles quantités de données.

16. Noeud de gestion de mobilité selon l'une quelconque des revendications 13 à 15, dans lequel la circuiterie de traitement (403) est configurée en outre pour réaliser le procédé selon l'une quelconque des revendications 4 à 12.

17. Procédé, dans un dispositif est configuré pour des communications de faibles quantités de données dans un réseau, le dispositif étant en communication avec un réseau basé sur l'évolution à long terme, LTE, le procédé comprenant :
l'envoi (40), à un noeud de gestion de mobilité, d'une demande de rattachement ; et
la réception (42), à partir du noeud de gestion de mobilité, d'une réponse de rattachement, ladite réponse de rattachement comprenant des instructions de restriction et/ou un ou plusieurs codes de résultat pour une restriction d'au moins une fonctionnalité de communication associée au dispositif sur la base d'un type prédéterminé de communications de faibles quantités de données dans lequel le dispositif est configuré pour s'engager et/ou d'une restriction implicite en ce que la demande de rattachement est acceptée sans une porteuse de système par paquets évolué, EPS, par défaut.

18. Procédé selon la revendication 17, dans lequel la demande de rattachement est une demande pour un rattachement au réseau sans une demande pour une porteuse EPS par défaut.

19. Procédé selon la revendication 17, dans lequel la demande de rattachement est une demande pour un rattachement au réseau avec une demande pour une porteuse EPS par défaut et la réponse de rattachement comprend une acceptation de rattachement et un message de rejet d'établissement de connexion de réseau de données par paquets, PDN.

20. Procédé selon la revendication 18 ou 19, comprenant en outre le maintien (44) d'un rattachement au réseau, sans aucune porteuse EPS par défaut ni porteuse dédiée, lors de la réception d'une acceptation de rattachement avec un message de rejet d'établissement de connexion PDN ou une acceptation de rattachement sans aucun message lié à la connectivité PDN.

21. Procédé selon l'une quelconque des revendications 17 à 20, dans lequel la demande de rattachement comprend en outre un élément d'information identifiant le dispositif comme étant configuré pour le type prédéterminé de communications de faibles quantités de données.

22. Procédé selon l'une quelconque des revendications 17 à 21, dans lequel la restriction de l'au moins une fonctionnalité de communication comprend une limitation ou une désactivation d'au moins un type de fonction utilisable par le dispositif.

23. Procédé selon la revendication 22, dans lequel l'au moins un type de fonction est un service vocal et/ou de service de messages courts, SMS.

24. Procédé selon l'une quelconque des revendications 17 à 23, dans lequel la restriction de l'au moins une fonctionnalité de communication comprend une limitation du dispositif pour utiliser un seul ou un ensemble limité de protocoles prédéfinis.

25. Procédé selon l'une quelconque des revendications 17 à 24, dans lequel la restriction de l'au moins une fonctionnalité de communication comprend une restriction sur une utilisation de ressources de réseau sur la base au moins d'une qualité de service, QoS, associée, d'un débit binaire maximal et/ou d'un débit de paquets maximal.

26. Procédé selon l'une quelconque des revendications 17 à 25, dans lequel la restriction de l'au moins une fonctionnalité de communication comprend une limitation du dispositif pour utiliser une seule ou un nombre réduit de porteuses de réseau central par paquets évolué, EPC.

27. Procédé selon l'une quelconque des revendications 17 à 26, dans lequel la restriction de l'au moins une fonctionnalité de communication comprend une désactivation du dispositif pour utiliser des quelconques porteuses de réseau central par paquets évolué, EPC.

28. Dispositif configuré pour des communications de faibles quantités de données dans un réseau, le dispositif étant en communication avec un réseau basé sur l'évolution à long terme, LTE, le dispositif comprenant :
une circuiterie radio (501) configurée pour envoyer, à un noeud de gestion de mobilité, une demande de rattachement ; et
la circuiterie radio (501) étant configurée pour recevoir, à partir du noeud de gestion de mobilité, une réponse de rattachement, ladite réponse de rattachement comprenant des instructions de restriction et/ou un ou plusieurs codes de résultat pour une restriction d'au moins une fonctionnalité de communication associée au dispositif sur la base d'un type prédéterminé de communications de faibles quantités de données dans lequel le dispositif est configuré pour s'engager et/ou d'une restriction implicite en ce que la demande de rattachement est acceptée sans une porteuse de système par paquets évolué, EPS, par défaut.

29. Dispositif selon la revendication 28, dans lequel la demande de rattachement est une demande pour un rattachement au réseau sans une demande pour une porteuse EPS par défaut.

30. Dispositif selon la revendication 29, dans lequel la demande de rattachement est une demande pour un rattachement au réseau avec une demande pour une porteuse EPS par défaut et la réponse de rattachement comprend une acceptation de rattachement et un message de rejet d'établissement de connexion de réseau de données par paquets, PDN.

31. Dispositif selon la revendication 29 ou 30, comprenant en outre une circuiterie de traitement (503) configurée pour maintenir un rattachement au réseau, sans aucune porteuse EPS par défaut ni porteuse dédiée, lors d'une réception d'une acceptation de rattachement avec un message de rejet d'établissement de connexion PDN ou une acceptation de rattachement sans aucun message lié à la connectivité PDN.

32. Dispositif selon l'une quelconque des revendications 29 à 31, étant configuré en outre pour réaliser le procédé selon les revendications 21 à 27.
